# EUROPEAN PATENT APPLICATION

(11) **EP 4 742 633 A2**
(43) Date of publication of application: **13.05.2026**
(21) Application number: 26167347.9
(22) Date of filing: 29.05.2018
(51) Int. Cl.: H04L 67/131

(54) **APPARATUS AND METHOD FOR RECORDING AND REPLAYING INTERACTIVE CONTENT IN AUGMENTED/VIRTUAL REALITY IN INDUSTRIAL AUTOMATION SYSTEMS AND OTHER SYSTEMS**

(30) Priority: 08.06.2017 US 201762517006 P; 30.03.2018 US 201815942155
(62) Divisional of application: 18814310.1
(71) Applicant: Honeywell International Inc., Morris Plains, NJ 07950 (US)
(72) Inventor: DUDEKULA, Subhan Basha, Morris Plains, 07950 (US); AHAMED, Arif Shuail, Morris Plains, 07950 (US); KONIKI, Ramesh Babu, Morris Plains, 07950 (US); DUTTA, Manas, Morris Plains, 07950 (US); PHILLIPS, Mark, Morris Plains, 07950 (US)
(74) Representative: Houghton, Mark Phillip

(57) **Abstract**

A method includes receiving (404) data defining user actions associated with an AR/VR space. The method also includes translating (410) the user actions into associated commands and identifying (412) associations of the commands with visual objects in the AR/VR space. The method further includes aggregating (414) the commands, the associations of the commands with the visual objects, and an AR/VR environment setup into at least one file (120) and transmitting or storing (416) the file(s). Another method includes receiving (504) at least one file (120) containing commands, associations of the commands with visual objects in an AR/VR space, and an AR/VR environment setup. The other method also includes translating (508) the commands into associated user actions and recreating or causing a user device (204, 206, 208) to recreate (512-514) (i) the AR/VR space containing the visual objects based on the AR/VR environment setup and (ii) the user actions in the AR/VR space based on the associations of the commands with the visual objects.

## Description

### CROSS-REFERENCE TO RELATED APPLICATIONS AND PRIORITY CLAIM

This application claims priority under 35 U.S.C. § 119(e) to U.S. Provisional Patent Application No. 62/517,006, U.S. Provisional Patent Application No. 62/517,015, and U.S. Provisional Patent Application No. 62/517,037, all filed on June 8, 2017. These provisional applications are hereby incorporated by reference in their entirety.

### TECHNICAL FIELD

This disclosure generally relates to augmented reality and virtual reality systems. More specifically, this disclosure relates to an apparatus and method for recording and replaying interactive content in augmented/virtual reality in industrial automation systems and other systems.

### BACKGROUND

Augmented reality and virtual reality technologies are advancing rapidly and becoming more and more common in various industries. Augmented reality generally refers to technology in which computer-generated content is superimposed over a real-world environment. Examples of augmented reality include games that superimpose objects or characters over real-world images and navigation tools that superimpose information over real-world images. Virtual reality generally refers to technology that creates an artificial simulation or recreation of an environment, which may or may not be a real-world environment. An example of virtual reality includes games that create fantasy or alien environments that can be explored by users.

### SUMMARY

This disclosure provides an apparatus and method for recording and replaying interactive content in augmented/virtual reality in industrial automation systems and other systems.

In a first embodiment, a method includes receiving data defining user actions associated with an augmented reality/virtual reality (AR/VR) space. The method also includes translating the user actions into associated commands and identifying associations of the commands with visual objects in the AR/VR space. The method further includes aggregating the commands, the associations of the commands with the visual objects, and an AR/VR environment setup into at least one file. In addition, the method includes transmitting or storing the at least one file.

In a second embodiment, an apparatus includes at least one processing device configured to receive data defining user actions associated with an AR/VR space. The at least one processing device is also configured to translate the user actions into associated commands and to identify associations of the commands with visual objects in the AR/VR space. The at least one processing device is further configured to aggregate the commands, the associations of the commands with the visual objects, and an AR/VR environment setup into at least one file. In addition, the at least one processing device is configured to transmit or store the at least one file.

In a third embodiment, a method includes receiving at least one file containing commands, associations of the commands with visual objects in an AR/VR space, and an AR/VR environment setup. The method also includes translating the commands into associated user actions. In addition, the method includes recreating or causing a user device to recreate (i) the AR/VR space containing the visual objects based on the AR/VR environment setup and (ii) the user actions in the AR/VR space based on the associations of the commands with the visual objects.

In a fourth embodiment, an apparatus includes at least one processing device configured to receive at least one file containing commands, associations of the commands with visual objects in an AR/VR space, and an AR/VR environment setup. The at least one processing device is also configured to translate the commands into associated user actions. In addition, the at least one processing device is configured to recreate or causing a user device to recreate (i) the AR/VR space containing the visual objects based on the AR/VR environment setup and (ii) the user actions in the AR/VR space based on the associations of the commands with the visual objects.

In a fifth embodiment, a non-transitory computer readable medium contains instructions that when executed cause at least one processing device to perform the method of the first embodiment or any of its dependent claims. In a sixth embodiment, a non-transitory computer readable medium contains instructions that when executed cause at least one processing device to perform the method of the third embodiment or any of its dependent claims.

Other technical features may be readily apparent to one skilled in the art from the following figures, descriptions, and claims.

### BRIEF DESCRIPTION OF THE DRAWINGS

For a more complete understanding of this disclosure, reference is now made to the following description, taken in conjunction with the accompanying drawings, in which:
FIGURE 1 illustrates an example architecture for recording interactive content in augmented/virtual reality according to this disclosure;
FIGURE 2 illustrates an example architecture for replaying interactive content in augmented/virtual reality according to this disclosure;
FIGURE 3 illustrates an example device that supports recording or replaying of interactive content in augmented/virtual reality according to this disclosure; and
FIGURES 4 and 5 illustrate example methods for recording and replaying interactive content in augmented/virtual reality according to this disclosure.

### DETAILED DESCRIPTION

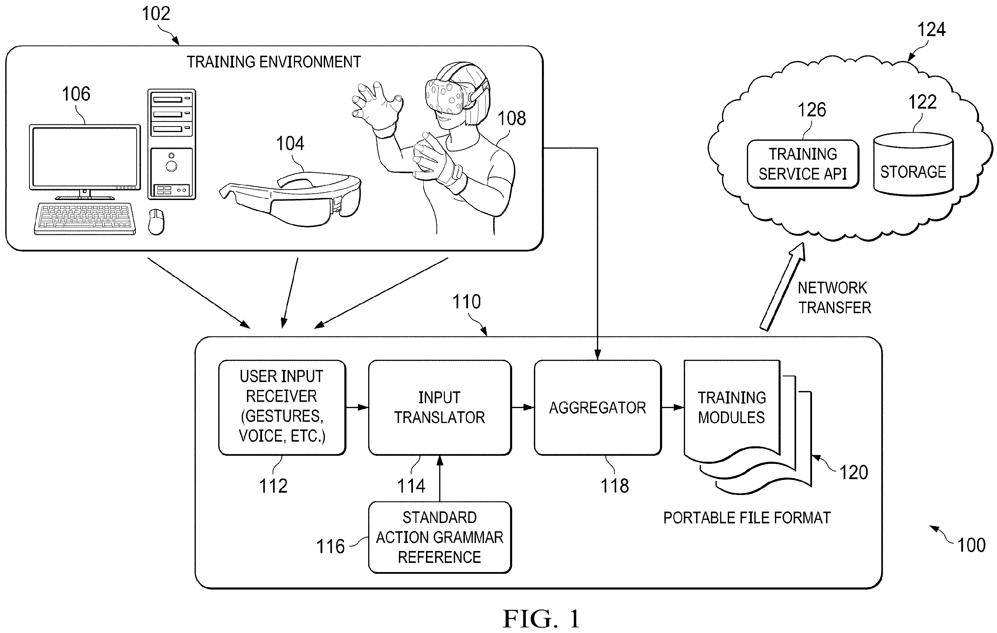

FIGURES 1 through 5, discussed below, and the various embodiments used to describe the principles of the present invention in this patent document are by way of illustration only and should not be construed in any way to limit the scope of the invention. Those skilled in the art will understand that the principles of the invention may be implemented in any type of suitably arranged device or system.

As noted above, augmented reality and virtual reality technologies are advancing rapidly, and various potential uses for augmented reality and virtual reality technologies have been devised. However, some of those potential uses have a number of technical limitations or problems. For example, augmented reality and virtual reality technologies could be used to help train humans to perform various tasks, such as controlling an industrial process or repairing equipment. Unfortunately, the number of vendors providing augmented/virtual reality technologies is increasing quickly, and there are no industry standards for input mechanisms like gestures, voice commands, voice annotations, or textual messages. This poses a technical problem in attempting to create, record, and replay user actions as part of training content or other interactive content. Ideally, the interactive content should be device-agnostic to allow the interactive content to be recorded from and replayed on various augmented/virtual reality devices. Alternatives such as video/image recording of a user's actions for distribution in an augmented/virtual environment pose various challenges, such as in terms of storage space, processor computation, and transmission bandwidth. These challenges can be particularly difficult when there is a large amount of interactive content to be recorded and replayed.

This disclosure provides techniques for recording, storing, and distributing users' actions in augmented/virtual reality environments. Among other things, this disclosure describes a portable file format that captures content such as user inputs, data formats, and training setups. The portable file format allows for easier storage, computation, and distribution of interactive content and addresses technical constraints with respect to space, computation, and bandwidth.

FIGURE 1 illustrates an example architecture 100 for recording interactive content in augmented/virtual reality according to this disclosure. As shown in FIGURE 1, the architecture 100 includes a training environment 102, which denotes a visualization layer that allows interaction with an augmented reality/virtual reality (AR/VR) space. In this example, the training environment 102 can include one or more end user devices, such as at least one AR/VR headset 104, at least one computing device 106, or at least one interactive AR/VR system 108. Each headset 104 generally denotes a device that is worn by a user and that displays an AR/VR space. The headset 104 in FIGURE 1 is a MICROSOFT HOLOLENS device, although any other suitable AR/VR device could be used. Each computing device 106 generally denotes a device that processes data to present an AR/VR space (although not necessarily in a 3D format) to a user. Each computing device 106 denotes any suitable computing device, such as a desktop computer, laptop computer, tablet computer, or smartphone. Each interactive AR/VR system 108 includes a headset and one or more user input devices, such as interactive or smart gloves. Although not shown, one or more input devices could also be used with the headset 104 or the computing device 106.

The architecture 100 also includes at least one processor, such as in a server 110, that is used to record training content or other interactive content. The server 110 generally denotes a computing device that receives content from the training environment 102 and records and processes the content. The server 110 includes various functions or modules to support the recording and processing of interactive content. Each of these functions or modules could be implemented in any suitable manner, such as with software/firmware instructions executed by one or more processors. The server 110 could be positioned locally with or remote from the training environment 102.

Functionally, the server 110 includes a user input receiver 112, which receives, processes, and filters user inputs made by the user. The user inputs could include any suitable inputs, such as gestures made by the user, voice commands or voice annotations spoken by the user, textual messages provided by the user, or pointing actions taken by the user using a pointing device (such as a smart glove). Any other or additional user inputs could also be received. The user inputs can be filtered in any suitable manner and are output to an input translator 114. To support the use of the architecture 100 by a wide range of users, input variants (like voice/text in different languages) could be supported. The user input receiver 112 includes any suitable logic for receiving and processing user inputs.

The input translator 114 translates the various user inputs into specific commands by referring to a standard action grammar reference 116. The grammar reference 116 represents an actions-to-commands mapping dictionary that associates different user input actions with different commands. For example, the grammar reference 116 could associate certain spoken words, text messages, or physical actions with specific commands. The grammar reference 116 could support one or multiple possibilities for commands where applicable, such as when different commands may be associated with the same spoken words or text messages but different physical actions. The grammar reference 116 includes any suitable mapping or other association of actions and commands. The input translator 114 includes any suitable logic for identifying commands associated with received user inputs.

The input translator 114 outputs identified commands to an aggregator 118. The aggregator 118 associates the commands with visual objects in the AR/VR space being presented to the user into one or more training modules 120. The aggregator 118 also embeds an AR/VR environment setup into the one or more training modules 120. The AR/VR environment setup can define what visual objects are to be presented in the AR/VR space. The training modules 120 therefore associate specific commands (which were generated based on user inputs) with specific visual objects in the AR/VR space as defined by the environment setup. The aggregator 118 includes any suitable logic for aggregating data.

The training modules 120 are created in a portable file format, which allows the training modules 120 to be used by various other user devices. For example, the data in the training modules 120 can be used by other user devices to recreate the AR/VR space and the actions taken in the AR/VR space. Effectively, this allows training content or other interactive content in the modules 120 to be provided to various users for training purposes or other purposes. The portable file format could be defined in any suitable manner, such as by using XML or JSON.

The training modules 120 could be used in various ways. In this example, the training modules 120 are transferred over a network (such as via a local intranet or a public network like the Internet) for storage in a database 122. The database 122 could be local to the training environment 102 and the server 110 or remote from one or both of these components. As a particular example, the database 122 could be used within a cloud computing environment 124 or other remote network. Also, the database 122 could be accessed via a training service application programming interface (API) 126. The API 126 denotes a web interface that allows uploading or downloading of training modules 120. Note, however, that the training modules 120 could be stored or used in any other suitable manner.

Based on this, the following process could be performed using the various components in FIGURE 1. An application executing in an AR/VR space, on a mobile device, or on any other suitable device initiates a recording and sends user input action details (such as gestures, voice, and textual messages) to the user input receiver 112. The user input receiver 112 detects and tracks the user input actions (such as gestures, voice, textual messages, and pointing device actions), filters the actions as needed, and passes the selected/filtered actions to the input translator 114. The input translator 114 converts the user actions into system-understandable commands by referring to the grammar reference 116, and the input translator 114 passes these commands to the aggregator 118. The aggregator 118 associates the system-understandable commands to visual objects, embeds the AR/VR environment setup, and prepares one or more training modules 120 in a portable file format. The training modules 120 are processed and stored on-site or remotely.

In this way, the architecture 100 can be used to record and store one or more users' actions in one or more AR/VR environments. As a result, training data and other data associated with the AR/VR environments can be easily captured, stored, and distributed in the training modules 120. Other devices and systems can use the training modules 120 to recreate the AR/VR environments (either automatically or in a user-driven manner) and allow other people to view the users' actions in the AR/VR environments.

The training modules 120 can occupy significantly less space in memory and require significantly less bandwidth for transmission and storage compared to alternatives such as video/image recording. Moreover, the training modules 120 can be used to recreate the AR/VR environments and the users' actions in the AR/VR environments with significantly less computational requirements compared to alternatives such as video/image reconstruction and playback. These features can provide significant technical advantages, such as in systems that use large amounts of interactive data in a number of AR/VR environments.

Although FIGURE 1 illustrates one example of an architecture 100 for recording interactive content in augmented/virtual reality, various changes may be made to FIGURE 1. For example, the architecture 100 could support any number of training environments 102, headsets 104, computing devices 106, AR/VR systems 108, servers 110, or other components. Also, the training modules 120 could be used in any other suitable manner. In addition, while described as being used with or including a training environment 102 and generating training modules 120, the architecture 100 could be used with or include any suitable environment 102 and be used to generate any suitable modules 120 containing interactive content (whether or not used for training purposes).

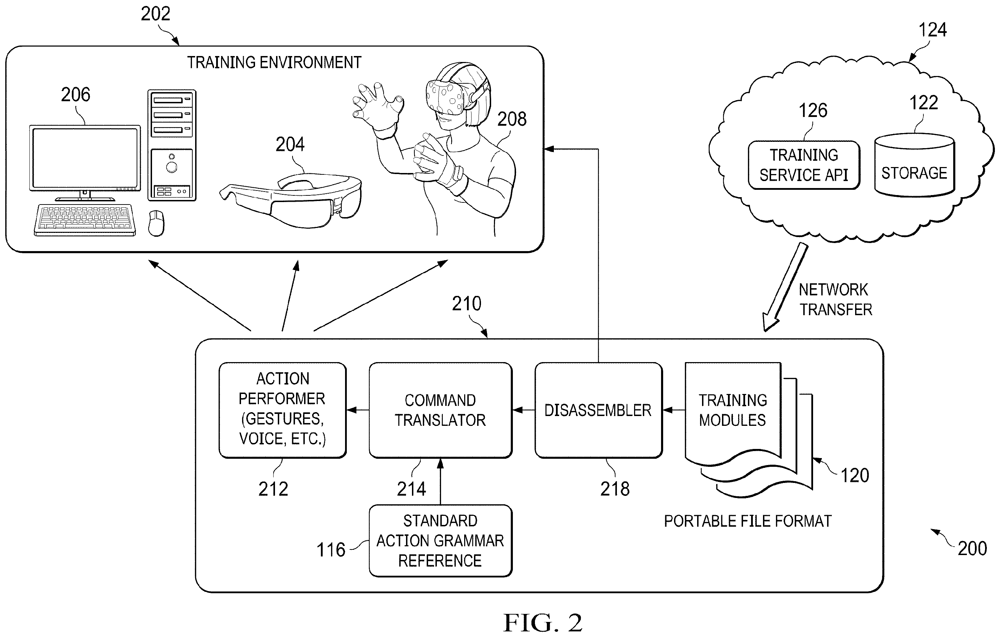

FIGURE 2 illustrates an example architecture 200 for replaying interactive content in augmented/virtual reality according to this disclosure. The architecture 200 in FIGURE 2 is similar to the architecture 100 in FIGURE 1, but the architecture 200 in FIGURE 2 is used to replay interactive content that could have been captured using the architecture 100 in FIGURE 1.

As shown in FIGURE 2, the architecture 200 includes a training environment 202, which may or may not be similar to the training environment 102 described above. In this example, the training environment 202 includes at least one headset 204, at least one computing device 206, or at least one interactive AR/VR system 208. Note that these devices 204-208 may or may not be the same as the devices 104-108 in FIGURE 1. Since the training modules 120 are in a portable file format, the training modules 120 can be generated and used by different types of devices.

The architecture 200 also includes at least one processor, such as in a server 210, that is used to replay training content or other interactive content. For example, the server 210 could receive one or more training modules 120 (such as from the storage 122 via the API 126) and replay the interactive content from the modules 120 for one or more users. The server 210 includes various functions or modules to support the replay of interactive content. Each of these functions or modules could be implemented in any suitable manner, such as with software/ firmware instructions executed by one or more processors. The server 210 could be positioned locally with or remote from the training environment 202. The server 210 could also denote the server 110 in FIGURE 1, allowing the server 110/210 to both record and replay content.

Functionally, the server 210 includes a disassembler 218, which separates each training module 120 into separate data elements. The separate data elements could relate to various aspects of an AR/VR space, such as data related to the visual environment overall, data related to specific visual objects, and commands. The disassembler 218 can output the data related to the visual environment and the visual objects to the training environment 202. The training environment 202 can use this information to cause the appropriate user device 204-208 to recreate the overall visual environment and the visual objects in the visual environment within an AR/VR space being presented by the user device. The disassembler 218 can also output commands to a command translator 214. The disassembler 218 includes any suitable logic for separating data in training modules.

The command translator 214 translates the various commands into specific user actions by referring to the standard action grammar reference 116. This allows the command translator 214 to map the commands back into user actions, effectively reversing the mapping done by the input translator 114. The command translator 214 includes any suitable logic for identifying user actions associated with received commands.

The command translator 214 outputs the user actions to an action performer 212. The action performer 212 interacts with the training environment 202 to cause the appropriate user device 204-208 to render the identified user actions and replay the user actions within the AR/VR space being presented by the user device. At least some of the user actions in the AR/VR space can be recreated based on the associations of the commands with specific visual objects in the AR/VR space. This allows the AR/VR environment to be recreated for the user based on the interactive content in a training module 120. The user could, for example, see how someone else controls an industrial process or repairs equipment. To support the use of the architecture 200 by a wide range of users, output variants (like voice/text in different languages) could be supported. The action performer 212 includes any suitable logic for creating actions within an AR/VR environment.

Based on this, the following process could be performed using the various components in FIGURE 2. An application executing in an AR/VR space, on a mobile device, or on any other suitable device initiates the replay of a training module 120, such as via the API 126. The API 126 fetches the appropriate training module 120 and passes it to the disassembler 218. The disassembler 218 separates the training module 120 into data related to the visual environment, visual objects, and commands. The disassembler 218 passes the visual environment and visual object details to the training environment 202 and passes the commands to the command translator 214. The command translator 214 converts the commands to user actions by referring to the grammar reference 116 and passes the user actions to the action performer 212. The action performer 212 renders the user actions and replays them in the visual environment.

In this way, the architecture 200 can be used to recreate one or more people's actions in one or more AR/VR environments. As a result, training data and other data associated with the AR/VR environments can be easily obtained and used to recreate the AR/VR environments, allowing users to view other people's actions in the AR/VR environments. The training modules 120 can occupy significantly less space in memory and require significantly less bandwidth for reception and storage compared to alternatives such as video/image recording. Moreover, the training modules 120 can be used to recreate the AR/VR environments and people's actions in the AR/VR environments with significantly less computational requirements compared to alternatives such as video/image reconstruction and playback. These features can provide significant technical advantages, such as in systems that use large amounts of interactive data in a number of AR/VR environments.

Although FIGURE 2 illustrates one example of an architecture 200 for replaying interactive content in augmented/virtual reality, various changes may be made to FIGURE 2. For example, the architecture 200 could support any number of training environments 202, headsets 204, computing devices 206, AR/VR systems 208, servers 210, or other components. Also, the training modules 120 could be used in any other suitable manner. In addition, while described as being used with or including a training environment 202 and using training modules 120, the architecture 200 could be used with or include any suitable environment 202 and be used with any suitable modules 120 containing interactive content (whether or not used for training purposes).

Note that while the architectures 100 and 200 in FIGURES 1 and 2 are shown separately with different user devices 104-108/204-208, the architectures 100 and 200 could be implemented together. In such a case, a single server 110/210 could both capture content associated with a specific user and replay content from other users. This may allow, for example, a single user to both (i) send data identifying what that user is doing in his or her AR/VR environment and (ii) receive data identifying what one or more other users are doing in their AR/VR environments.

Also note that while the recording of training content and the later playback of that training content is one example use of the devices and techniques described above, other uses of the devices and techniques are also possible. For example, these devices and techniques could allow the server 110 to generate training content or other interactive content that is streamed or otherwise provided in real-time or near real-time to a server 210 for playback. This may allow, for instance, a first user to demonstrate actions in an AR/VR space that are then recreated in the AR/VR space for a second user. If desired, feedback can be provided from the second user to the first user, which may allow the first user to repeat or expand on certain actions. As another example, these devices and techniques could be used to record and recreate users' actions in any suitable AR/VR space, and the users' actions may or may not be used for training purposes.

This technology can find use in a number of ways in industrial automation settings or other settings. For example, control and safety systems and related instrumentations used in industrial plants (such as refinery, petrochemical, and pharmaceutical plants) are often very complex in nature. It may take a lengthy period of time (such as more than five years) to train new system maintenance personnel to become proficient in managing plant and system upsets independently. Combining such long delays with a growing number of experienced personnel retiring in the coming years means that industries are facing acute skill shortages and increased plant upsets due to the lack of experience and skill.

Traditional classroom training, whether face-to-face or online, often requires personnel to be away from the field for an extended time (such as 20 to 40 hours). In many cases, this is not practical, particularly for plants that are already facing resource and funding challenges due to overtime, travel, or other issues. Also, few sites have powered-on and functioning control hardware for training. Due to the fast rate of change for technology, it may no longer be cost-effective to procure and maintain live training systems.

Simulating control and safety system hardware in the AR/VR space, building dynamics of real hardware modules in virtual objects, and interfacing the AR/VR space with real supervisory systems (such as engineering and operator stations) can provide various benefits. For example, it can reduce or eliminate any dependency on real hardware for competency management. It can also "gamify" the learning of complex and mundane control and safety system concepts, which can help to keep trainees engaged. It can further decrease the time needed to become proficient in control and safety system maintenance through more hands-on practice sessions and higher retention of the training being imparted.

This represents example ways in which the devices and techniques described above could be used. However, these examples are non-limiting, and the devices and techniques described above could be used in any other suitable manner. In general, the devices and techniques described in this patent document could be applicable whenever one or more user actions in an AR/VR space are to be recorded, stored, and recreated in an AR/VR space for one or more other users (for whatever purpose).

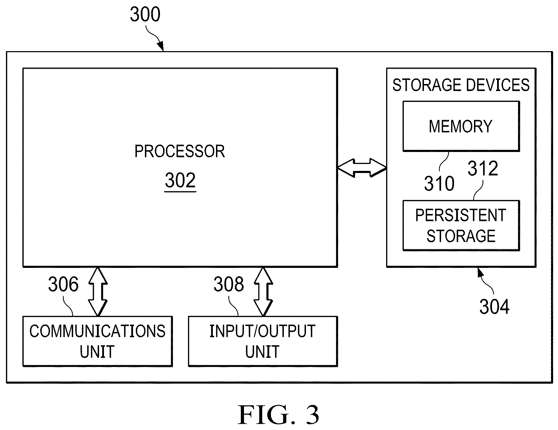

FIGURE 3 illustrates an example device 300 that supports recording or replaying of interactive content in augmented/virtual reality according to this disclosure. For example, the device 300 could represent either or both of the servers 110, 210 described above. Note that the same device 300 could be used to both record and replay training content or other interactive content, although this is not required.

As shown in FIGURE 3, the device 300 includes at least one processing device 302, at least one storage device 304, at least one communications unit 306, and at least one input/output (I/O) unit 308. The processing device 302 executes instructions that may be loaded into a memory 310, such as instructions that (when executed by the processing device 302) implement the functions of the server 110 and/or the server 210. The processing device 302 includes any suitable number(s) and type(s) of processors or other devices in any suitable arrangement. Example types of processing devices 302 include microprocessors, microcontrollers, digital signal processors, field programmable gate arrays, application specific integrated circuits, and discrete circuitry.

The memory 310 and a persistent storage 312 are examples of storage devices 304, which represent any structure(s) capable of storing and facilitating retrieval of information (such as data, program code, and/or other suitable information on a temporary or permanent basis). The memory 310 may represent a random access memory or any other suitable volatile or non-volatile storage device(s). The persistent storage 312 may contain one or more components or devices supporting longer-term storage of data, such as a read only memory, hard drive, Flash memory, or optical disc.

The communications unit 306 supports communications with other systems or devices. For example, the communications unit 306 could include a network interface card or a wireless transceiver facilitating communications over a wired or wireless network (such as a local intranet or a public network like the Internet). The communications unit 306 may support communications through any suitable physical or wireless communication link(s).

The I/O unit 308 allows for input and output of data. For example, the I/O unit 308 may provide a connection for user input through a keyboard, mouse, keypad, touchscreen, or other suitable input device. The I/O unit 308 may also send output to a display, printer, or other suitable output device.

Although FIGURE 3 illustrates one example of a device 300 that supports recording or replaying of interactive content in augmented/virtual reality, various changes may be made to FIGURE 3. For example, computing devices come in a wide variety of configurations, and FIGURE 3 does not limit this disclosure to any particular computing device.

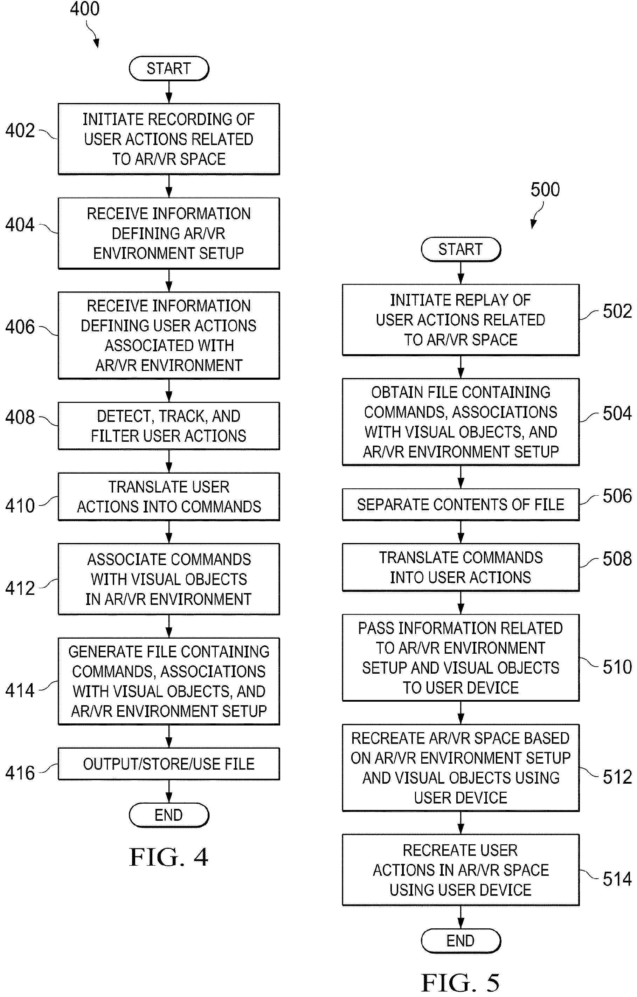

FIGURES 4 and 5 illustrate example methods for recording and replaying interactive content in augmented/virtual reality according to this disclosure. In particular, FIGURE 4 illustrates an example method 400 for recording interactive content in augmented/virtual reality, and FIGURE 5 illustrates an example method 500 for replaying interactive content in augmented/virtual reality. For ease of explanation, the methods 400 and 500 are described as being performed using the device 300 operating as the server 110 in FIGURE 1 (method 400) or as the server 210 in FIGURE 2 (method 500). However, the methods 400 and 500 could be used with any suitable devices and in any suitable systems.

As shown in FIGURE 4, a recording of user actions related to an AR/VR space is initiated at step 402. This could include, for example, the processing device 302 of the server 110 receiving an indication from a user device 104-108 that a user wishes to initiate the recording. Information defining an AR/VR environment setup is received at step 404. This could include, for example, the processing device 302 of the server 110 receiving information identifying the overall visual environment of the AR/VR space being presented to the user by the user device 104-108 and information identifying visual objects in the AR/VR space being presented to the user by the user device 104-108.

Information defining user actions associated with the AR/VR environment is received at step 406. This could include, for example, the processing device 302 of the server 110 receiving information identifying how the user is interacting with one or more of the visual objects presented in the AR/VR space by the user device 104-108. The interactions could take on various forms, such as the user making physical gestures, speaking voice commands, speaking voice annotations, or providing textual messages. This information is used to detect, track, and filter the user actions at step 408. This could include, for example, the processing device 302 of the server 110 processing the received information to identify distinct gestures, voice commands, voice annotations, or textual messages that occur. This could also include the processing device 302 of the server 110 processing the received information to identify visual objects presented in the AR/VR space that are associated with those user actions.

The user actions are translated into commands at step 410. This could include, for example, the processing device 302 of the server 110 using the standard action grammar reference 116 and its actions-to-commands mapping dictionary to associate different user actions with different commands. Specific commands are associated with specific visual objects presented in the AR/VR space at step 412. This could include, for example, the processing device 302 of the server 110 associating specific ones of the identified commands with specific ones of the visual objects presented in the AR/VR space. This allows the server 110 to identify which visual objects are associated with the identified commands.

At least one file is generated that contains the commands, the associations of the commands with the visual objects, and the AR/VR environment setup at step 414. This could include, for example, the processing device 302 of the server 110 generating a module 120 containing this information. The at least one file is output, stored, or used in some manner at step 416. This could include, for example, the processing device 302 of the server 110 storing the module 120 in a memory or database 122, streaming the module 120 to one or more destinations, or using the module 120 to recreate the user actions in another person's AR/VR space.

As shown in FIGURE 5, a replay of user actions related to an AR/VR space is initiated at step 502. This could include, for example, the processing device 302 of the server 210 receiving an indication from a user device 204-208 that a user wishes to initiate the replay. A suitable file containing commands, associations of the commands with visual objects, and an AR/VR environment setup is obtained at step 504. This could include, for example, the processing device 302 of the server 210 obtaining a module 120 from the database 122, such as via the API 126. The specific module 120 could be identified in any suitable manner, such as based on a specific module or topic identified by the server 210.

The contents of the file are separated at step 506. This could include, for example, the processing device 302 of the server 210 separating the data related to the AR/VR environment setup, the visual objects, and the commands. The commands are translated into user actions at step 508. This could include, for example, the processing device 302 of the server 210 using the standard action grammar reference 116 to associate different commands with different user actions. The specific commands (and therefore the specific user actions) are associated with specific visual objects to be presented in the AR/VR space based on the association data contained in the module 120.

The information related to the AR/VR environment setup and the visual objects is passed to a user device at step 510. This could include, for example, the processing device 302 of the server 210 passing the information to the user device 204-208. The user device recreates an AR/VR space based on the AR/VR environment setup and the visual objects at step 512, and the user device recreates the user actions in the AR/VR space at step 514. This could include, for example, the user device 204-208 creating an overall visual environment using the AR/VR environment setup and displaying visual objects within the visual environment. This could also include the action performer 212 causing the user device 204-208 to recreate specific user actions in association with specific visual objects within the AR/VR environment.

Although FIGURES 4 and 5 illustrate examples of methods 400 and 500 for recording and replaying interactive content in augmented/virtual reality, various changes may be made to FIGURES 4 and 5. For example, while each figure illustrates a series of steps, various steps in each figure could overlap, occur in parallel, occur in a different order or occur any number of times.

In some embodiments, various functions described in this patent document are implemented or supported by a computer program that is formed from computer readable program code and that is embodied in a computer readable medium. The phrase "computer readable program code" includes any type of computer code, including source code, object code, and executable code. The phrase "computer readable medium" includes any type of medium capable of being accessed by a computer, such as read only memory (ROM), random access memory (RAM), a hard disk drive, a compact disc (CD), a digital video disc (DVD), or any other type of memory. A "non-transitory" computer readable medium excludes wired, wireless, optical, or other communication links that transport transitory electrical or other signals. A non-transitory computer readable medium includes media where data can be permanently stored and media where data can be stored and later overwritten, such as a rewritable optical disc or an erasable storage device.

It may be advantageous to set forth definitions of certain words and phrases used throughout this patent document. The terms "application" and "program" refer to one or more computer programs, software components, sets of instructions, procedures, functions, objects, classes, instances, related data, or a portion thereof adapted for implementation in a suitable computer code (including source code, object code, or executable code). The term "communicate," as well as derivatives thereof, encompasses both direct and indirect communication. The terms "include" and "comprise," as well as derivatives thereof, mean inclusion without limitation. The term "or" is inclusive, meaning and/or. The phrase "associated with," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, have a relationship to or with, or the like. The phrases "at least one of" and "one or more of," when used with a list of items, mean that different combinations of one or more of the listed items may be used, and only one item in the list may be needed. For example, "at least one of: A, B, and C" includes any of the following combinations: A, B, C, A and B, A and C, B and C, and A and B and C.

The description in the present application should not be read as implying that any particular element, step, or function is an essential or critical element that must be included in the claim scope. The scope of patented subject matter is defined only by the allowed claims. Moreover, none of the claims invokes 35 U.S.C. § 112(f) with respect to any of the appended claims or claim elements unless the exact words "means for" or "step for" are explicitly used in the particular claim, followed by a participle phrase identifying a function. Use of terms such as (but not limited to) "mechanism," "module," "device," "unit," "component," "element," "member," "apparatus," "machine," "system," "processor," or "controller" within a claim is understood and intended to refer to structures known to those skilled in the relevant art, as further modified or enhanced by the features of the claims themselves, and is not intended to invoke 35 U.S.C. § 112(f).

While this disclosure has described certain embodiments and generally associated methods, alterations and permutations of these embodiments and methods will be apparent to those skilled in the art. Accordingly, the above description of example embodiments does not define or constrain this disclosure. Other changes, substitutions, and alterations are also possible without departing from the spirit and scope of this disclosure, as defined by the following claims.
The present invention encompasses the subject matter of the following numbered sentences 1 to 15:
Sentence 1. A method comprising:
   receiving (404) data defining user actions associated with an augmented reality/virtual reality (AR/VR) space;
   translating (410) the user actions into associated commands;
   identifying (412) associations of the commands with visual objects in the AR/VR space;
   aggregating (414) the commands, the associations of the commands with the visual objects, and an AR/VR environment setup into at least one file (120); and
   transmitting or storing (416) the at least one file.
Sentence 2. The method of sentence 1, wherein the at least one file has a portable file format.
Sentence 3. The method of sentence 1, wherein the data defining the user actions comprises one or more of:
   data defining one or more gestures made by a user;
   data defining one or more voice commands or voice annotations spoken by the user;
   data defining one or more textual messages provided by the user; and
   data defining one or more pointing actions taken by the user using at least one pointing device.
Sentence 4. The method of sentence 1, wherein translating the user actions into the associated commands comprises using a grammar reference (116) that associates different user input actions with different commands.
Sentence 5. The method of sentence 1, further comprising:
   using (500) the at least one file to recreate the user actions in the AR/VR space.
Sentence 6. The method of sentence 5, wherein recreation of the user actions is performed automatically or is driven by a user viewing the recreated user actions.
Sentence 7. An apparatus comprising:
   at least one processing device (302) configured to perform the method of any of sentence 1-6.
Sentence 8. A non-transitory computer readable medium (304, 310, 312) containing instructions that when executed cause at least one processing device (302) to perform the method of any of sentence 1-6.
Sentence 9. A method comprising:
   receiving (504) at least one file (120) containing commands, associations of the commands with visual objects in an augmented reality/virtual reality (AR/VR) space, and an AR/VR environment setup;
   translating (508) the commands into associated user actions; and
   recreating or causing a user device (204, 206, 208) to recreate (512-514) (i) the AR/VR space containing the visual objects based on the AR/VR environment setup and (ii) the user actions in the AR/VR space based on the associations of the commands with the visual objects.
Sentence 10. The method of sentence 9, wherein the at least one file has a portable file format.
Sentence 11. The method of sentence 9, wherein the user actions comprise:
   one or more gestures made by a user;
   one or more voice commands or voice annotations spoken by the user;
   one or more textual messages provided by the user; and
   one or more pointing actions taken by the user using at least one pointing device.
Sentence 12. The method of sentence 9, wherein translating the commands into the associated user actions comprises using a grammar reference (116) that associates different user input actions with different commands.
Sentence 13. The method of sentence 9, wherein recreation of the user actions is performed automatically or is driven by a user viewing the recreated user actions.
Sentence 14. An apparatus comprising:
   at least one processing device (302) configured to perform the method of any of sentence 9-13.
Sentence 15. A non-transitory computer readable medium containing instructions that when executed cause at least one processing device to perform the method of any of sentence 9-13.

## Claims

1. A method comprising:
receiving (504) at least one file (120) containing commands, associations of the commands with visual objects in an augmented reality/virtual reality (AR/VR) space, and an AR/VR environment setup;
translating (508) the commands into associated user actions by using a grammar reference (116) that associates the user actions with different commands; and
associating (412) the commands with the visual objects presented in the AR/VR space; and recreating or causing a user device (204, 206, 208) to recreate (512-514) (i) the AR/VR space containing the visual objects based on the AR/VR environment setup and (ii) the user actions in the AR/VR space based on the associations of the commands with the visual objects.

2. The method of Claim 1, wherein the at least one file (120) has a portable file format that comprises at least one of an XML or JSON file format.

3. The method of Claim 1, wherein the user actions comprises:
one or more gestures made by a user;
one or more voice commands or voice annotations spoken by the user:
one or more textual messages provided by the user, and
one or more pointing actions taken by the user using at least one pointing

4. The method of Claim 1, wherein translating (508) the commands into associated user actions by using a grammar reference (116) comprises associating each user input action with corresponding commands based on the grammar reference (116) that represents an action-to-command mapping dictionary.

5. The method of Claim 1, wherein recreation of the user actions is performed automatically or is driven by a user.

6. An apparatus comprising:
at least one processing device (302) configured to perform the method of any of Claims 1- 5.

7. A non-transitory computer readable medium containing instructions that when executed cause at least one processing device to perform the method of any of Claims 1-5.
